# EUROPEAN PATENT APPLICATION

(11) **EP 4 629 371 A2**
(43) Date of publication of application: **08.10.2025**
(21) Application number: 25162495.3
(22) Date of filing: 10.03.2025
(51) Int. Cl.: H01M 10/04, H01M 50/595

(54) **ELECTRODE ASSEMBLY AND RECHARGEABLE BATTERY WITH THE SAME**

(30) Priority: 13.03.2024 KR 20240035377
(71) Applicant: SAMSUNG SDI CO., LTD., Yongin-si, Gyeonggi-do 17084 (KR)
(72) Inventor: LEE, Hyungdong, Gyeonggi-do 17084 (KR)
(74) Representative: Michalski Hüttermann & Partner Patentanwälte mbB

(57) **Abstract**

An electrode assembly includes a first electrode including a first substrate and a first composite layer on the first substrate, a separator, a second electrode including a second substrate and a second composite layer on the second substrate, and stacked and wound with the first electrode with the separator therebetween, a first uncoated region and a first electrode tab between a winding distal end of the first substrate and the first composite layer, a second uncoated region and a second electrode tab between a winding distal end of the second substrate and the second composite layer, a first insulator at the first electrode and contacting the first composite layer in the first uncoated region, and a second insulator at the first electrode and contacting the first insulator in the first uncoated region, wherein the first and second insulators contact each other at a distance from the second electrode tab.

## Description

### BACKGROUND

### 1. Field

The present disclosure relates to a rechargeable battery.

### 2. Description of the Related Art

Rechargeable batteries are used for various purposes, like powering small electronic devices, such as mobile phones and laptop computers, and like powering motors for transportation vehicles, such as electric vehicles and hybrid vehicles. Rechargeable batteries may be classified as cylindrical, prismatic, or pouch type depending on their shape, and electrode assemblies may be classified as stacked or wound types.

The wound-type electrode assembly includes a positive electrode and a negative electrode wound with a separator in between. The positive electrode and the negative electrode each include a substrate and a composite layer (an active material layer) positioned on the substrate. The electrode assembly undergoes volume changes, expanding during the charging process and contracting during the discharge process, and these volume changes are mainly caused by the volume changes of the negative electrode composite layer.

If the rechargeable battery is used for a long time, damage, such as cracks or tears, may occur in the substrate due to the repetitive volume changes in the electrode assembly, and such damage to the substrate may cause a deterioration in output, lifespan, and safety of the rechargeable battery.

### SUMMARY

The present disclosure provides an electrode assembly and a rechargeable battery equipped with the same that can maintain the output, lifespan, and safety of the rechargeable battery by reducing or preventing damage to the substrate, even if used for a long time.

An electrode assembly according to one or more embodiments includes a first electrode including a first substrate and a first composite layer on the first substrate, a separator, a second electrode including a second substrate and a second composite layer on the second substrate, the second electrode being stacked and wound with the first electrode with the separator therebetween, a first uncoated region and a first electrode tab between a winding distal end of the first substrate and the first composite layer, a second uncoated region and a second electrode tab between a winding distal end of the second substrate and the second composite layer, a first insulator at the first electrode and contacting the first composite layer in the first uncoated region, and a second insulator at the first electrode and contacting the first insulator in the first uncoated region, wherein the first insulator and the second insulator contact each other at a distance from the second electrode tab along a length direction of the first electrode and the second electrode.

The second electrode may be closer to a center of the electrode assembly than the first electrode, wherein the winding distal end of the first substrate may be further from the center of the electrode assembly than a winding distal end of the second substrate along a winding direction of the first electrode and the second electrode.

The first uncoated region may include an inner first uncoated region and an outer first uncoated region, wherein the first insulator and the second insulator may be in the inner first uncoated region and the outer first uncoated region, respectively.

The second electrode tab and the winding distal end of the second substrate may be between the second insulator in the inner first uncoated region and the second insulator in the outer first uncoated region.

The first insulator and the second insulator may include a polymer film with an adhesive material coated on one surface facing the first uncoated region.

The first insulator and the second insulator may have different respective colors.

A width of the first insulator along a width direction of the first electrode may be greater than a width of the first substrate.

A winding start end of the first substrate may be at a distance from a winding start end of the second substrate along the winding direction.

A third uncoated region and a third electrode tab may be between the winding start end of the first substrate and the first composite layer, wherein a fourth uncoated region and a fourth electrode tab may be between the winding start end of the second substrate and the second composite layer, and wherein the fourth electrode tab may be between the winding start end of the second substrate and the winding start end of the first substrate along the winding direction.

The electrode assembly may further include a third insulator in the third uncoated region, contacting the first composite layer, and at a distance from the winding start end of the first substrate.

The fourth uncoated region may include an inner fourth uncoated region and an outer fourth uncoated region, wherein a fourth insulator may be in the inner fourth uncoated region and the outer fourth uncoated region, and wherein the winding start end of the first substrate may be between the fourth insulator in the inner fourth uncoated region and the fourth insulator in the outer fourth uncoated region.

An electrode assembly according to one or more other embodiments includes a first electrode including a first substrate, a first uncoated region contacting a winding distal end of the first substrate, a third uncoated region contacting a winding start end of the first substrate, and a first composite layer between the first uncoated region and the third uncoated region; a second electrode including a second substrate, a second uncoated region contacting a winding distal end of the second substrate, a fourth uncoated region contacting a winding start end of the second substrate, and a second composite layer between the second uncoated region and the fourth uncoated region, and stacked and wound along with the first electrode with a separator in between; an insulator in a region facing the winding distal end of the second substrate in the first uncoated region; and another insulator in a region facing the winding start end of the first substrate in the fourth uncoated region, wherein, along a winding direction of the first electrode and the second electrode, the winding distal end of the first substrate and the winding distal end of the second substrate are spaced apart from each other, and the winding start end of the first substrate and the winding start end of the second substrate are spaced apart from each other.

The insulator may include a first insulator contacting the first composite layer and a second insulator contacting the first insulator in the first uncoated region, wherein the second electrode may include a second electrode tab in the second uncoated region at a distance from a portion where the first insulator and the second insulator are in contact along the winding direction.

The winding distal end of the second substrate and the second electrode tab may face the second insulator.

The electrode assembly may further include a third insulator in the third uncoated region, wherein the other insulator may include a fourth insulator in the fourth uncoated region, and wherein the winding start end of the first substrate may face the fourth insulator.

A rechargeable battery according to one or more embodiments includes an an electrode assembly including a first electrode and a second electrode stacked and wound with a separator in between, and a first insulator and a second insulator at the first electrode; and a case accommodating and sealing the electrode assembly with an electrolyte, wherein the first electrode includes a first substrate and a first composite layer on the first substrate, wherein a first uncoated region and a first electrode tab are between a winding distal end of the first substrate and the first composite layer, wherein the second electrode includes a second substrate and a second composite layer on the second substrate, wherein a second uncoated region and a second electrode tab are between a winding distal end of the second substrate and the second composite layer, wherein the first insulator contacts the first composite layer in the first uncoated region, wherein the second insulator contacts the first insulator in the first uncoated region, and wherein part where the first insulator and the second insulator are in contact is at a distance from the second electrode tab along a length direction of the first electrode and the second electrode.

The first uncoated region may include an inner first uncoated region and an outer first uncoated region, wherein the first insulator and the second insulator may be in the inner first uncoated region and the outer first uncoated region, and wherein the second electrode tab and the winding distal end of the second substrate may be between the second insulator in the inner first uncoated region and the second insulator in the outer first uncoated region.

The rechargeable battery may further include a fourth uncoated region and a fourth electrode tab may be between a winding start end of the second substrate and the second composite layer, wherein the fourth uncoated region may include an inner fourth uncoated region and an outer fourth uncoated region, wherein a fourth insulator may be in the inner fourth uncoated region and the outer fourth uncoated region, and wherein a winding start end of the first substrate may be between the fourth insulator in the inner fourth uncoated region and the fourth insulator in the outer fourth uncoated region.

The electrode assembly may protect the first uncoated region, and may suppress damage to the first substrate due to long-term use. Long-term durability and safety may be improved by increasing the insulation performance between the first electrode and the second electrode, and by reducing or preventing the likelihood of the thickness increasing rapidly in certain areas.

### BRIEF DESCRIPTION OF THE DRAWINGS

FIG. 1 is a schematic perspective view of an electrode assembly according to one or more embodiments.
FIG. 2 is a partially cut-away perspective view showing a part of the electrode assembly shown in FIG. 1 in an unfolded state.
FIG. 3A and FIG. 3B are top plan views showing an unfolded state of a first electrode and a second electrode among an electrode assembly shown in FIG. 2.
FIG. 4 is a cross-sectional view of a first electrode shown in FIG. 3A and FIG. 3B.
FIG. 5 is a cross-sectional view of a second electrode shown in FIG. 3A and FIG. 3B.
FIG. 6 is a partially enlarged cross-sectional view showing an area around winding distal ends of a first electrode and a second electrode among an electrode assembly shown in FIG. 1.
FIG. 7 is a partial enlarged view of FIG. 3A.
FIG. 8 is a partial enlarged cross-sectional view showing an area around winding start ends of first and second electrodes among an electrode assembly shown in FIG. 1.
FIG. 9 is a partial enlarged view of FIG. 3A.
FIG. 10 is an exploded perspective view of a rechargeable battery according to one or more embodiments.
FIG. 11 is an exploded perspective view of a rechargeable battery according to one or more other embodiments.

### DETAILED DESCRIPTION

Aspects of some embodiments of the present disclosure and methods of accomplishing the same may be understood more readily by reference to the detailed description of embodiments and the accompanying drawings. The described embodiments are provided as examples so that this disclosure will be thorough and complete, and will fully convey the aspects of the present disclosure to those skilled in the art. Accordingly, processes, elements, and techniques that are redundant, that are unrelated or irrelevant to the description of the embodiments, or that are not necessary to those having ordinary skill in the art for a complete understanding of the aspects of the present disclosure may be omitted. Unless otherwise noted, like reference numerals, characters, or combinations thereof denote like elements throughout the attached drawings and the written description, and thus, repeated descriptions thereof may be omitted.

The described embodiments may have various modifications and may be embodied in different forms, and should not be construed as being limited to only the illustrated embodiments herein. The use of "can," "may," or "may not" in describing an embodiment corresponds to one or more embodiments of the present disclosure.

A person of ordinary skill in the art would appreciate, in view of the present disclosure in its entirety, that the present disclosure covers all modifications, equivalents, and replacements within the idea and technical scope of the present disclosure, that each of the features of embodiments of the present disclosure may be combined with each other, in part or in whole, and technically various interlocking and operating are possible, and that each embodiment may be implemented independently of each other, or may be implemented together in an association, unless otherwise stated or implied.

In the drawings, the relative sizes of elements, layers, and regions may be exaggerated for clarity and/or descriptive purposes. In other words, because the sizes and thicknesses of elements in the drawings are arbitrarily illustrated for convenience of description, the disclosure is not limited thereto. Additionally, the use of cross-hatching and/or shading in the accompanying drawings is generally provided to clarify boundaries between adjacent elements. As such, neither the presence nor the absence of cross-hatching or shading conveys or indicates any preference or requirement for particular materials, material properties, dimensions, proportions, commonalities between illustrated elements, and/or any other characteristic, attribute, property, etc., of the elements, unless specified.

Various embodiments are described herein with reference to sectional illustrations that are schematic illustrations of embodiments and/or intermediate structures. As such, variations from the shapes of the illustrations as a result of, for example, manufacturing techniques and/or tolerances, are to be expected. Further, specific structural or functional descriptions disclosed herein are merely illustrative for the purpose of describing embodiments according to the concept of the present disclosure. Thus, embodiments disclosed herein should not be construed as limited to the illustrated shapes of elements, layers, or regions, but are to include deviations in shapes that result from, for instance, manufacturing.

Spatially relative terms, such as "beneath," "below," "lower," "lower side," "under," "above," "upper," "over," "higher," "upper side," "side" (e.g., as in "sidewall"), and the like, may be used herein for ease of explanation to describe one element or feature's relationship to another element(s) or feature(s) as illustrated in the figures. It will be understood that the spatially relative terms are intended to encompass different orientations of the device in use or in operation, in addition to the orientation depicted in the figures. For example, if the device in the figures is turned over, elements described as "below," "beneath," "or "under" other elements or features would then be oriented "above" the other elements or features. Thus, the example terms "below" and "under" can encompass both an orientation of above and below. The device may be otherwise oriented (e.g., rotated 90 degrees or at other orientations) and the spatially relative descriptors used herein should be interpreted accordingly. Similarly, when a first part is described as being arranged "on" a second part, this indicates that the first part is arranged at an upper side or a lower side of the second part without the limitation to the upper side thereof on the basis of the gravity direction.

Further, the phrase "in a plan view" means when an object portion is viewed from above, and the phrase "in a schematic cross-sectional view" means when a schematic cross-section taken by vertically cutting an object portion is viewed from the side. The terms "overlap" or "overlapped" mean that a first object may be above or below or to a side of a second object, and vice versa. Additionally, the term "overlap" may include stack, face or facing, extending over, covering, or partly covering or any other suitable term as would be appreciated and understood by those of ordinary skill in the art. The expression "not overlap" may include meaning, such as "apart from" or "set aside from" or "offset from" and any other suitable equivalents as would be appreciated and understood by those of ordinary skill in the art. The terms "face" and "facing" may mean that a first object may directly or indirectly oppose a second object. In a case in which a third object intervenes between a first and second object, the first and second objects may be understood as being indirectly opposed to one another, although still facing each other.

It will be understood that when an element, layer, region, or component is referred to as being "formed on," "on," "connected to," or "(operatively or communicatively) coupled to" another element, layer, region, or component, it can be directly formed on, on, connected to, or coupled to the other element, layer, region, or component, or indirectly formed on, on, connected to, or coupled to the other element, layer, region, or component such that one or more intervening elements, layers, regions, or components may be present. In addition, this may collectively mean a direct or indirect coupling or connection and an integral or non-integral coupling or connection. For example, when a layer, region, or component is referred to as being "electrically connected" or "electrically coupled" to another layer, region, or component, it can be directly electrically connected or coupled to the other layer, region, and/or component or one or more intervening layers, regions, or components may be present. The one or more intervening components may include a switch, a resistor, a capacitor, and/or the like. In describing embodiments, an expression of connection indicates electrical connection unless explicitly described to be direct connection, and "directly connected/directly coupled," or "directly on," refers to one component directly connecting or coupling another component, or being on another component, without an intermediate component.

In addition, in the present specification, when a portion of a layer, a film, an area, a plate, or the like is formed on another portion, a forming direction is not limited to an upper direction but includes forming the portion on a side surface or in a lower direction. On the contrary, when a portion of a layer, a film, an area, a plate, or the like is formed "under" another portion, this includes not only a case where the portion is "directly beneath" another portion but also a case where there is further another portion between the portion and another portion. Meanwhile, other expressions describing relationships between components, such as "between," "immediately between" or "adjacent to" and "directly adjacent to," may be construed similarly. It will be understood that when an element or layer is referred to as being "between" two elements or layers, it can be the only element or layer between the two elements or layers, or one or more intervening elements or layers may also be present.

For the purposes of this disclosure, expressions such as "at least one of," or "any one of," or "one or more of" when preceding a list of elements, modify the entire list of elements and do not modify the individual elements of the list. For example, "at least one of X, Y, and Z," "at least one of X, Y, or Z," "at least one selected from the group consisting of X, Y, and Z," and "at least one selected from the group consisting of X, Y, or Z" may be construed as X only, Y only, Z only, any combination of two or more of X, Y, and Z, such as, for instance, XYZ, XYY, YZ, and ZZ, or any variation thereof. Similarly, the expressions "at least one of A and B" and "at least one of A or B" may include A, B, or A and B. As used herein, "or" generally means "and/or," and the term "and/or" includes any and all combinations of one or more of the associated listed items. For example, the expression "A and/or B" may include A, B, or A and B. Similarly, expressions such as "at least one of," "a plurality of," "one of," and other prepositional phrases, when preceding a list of elements, modify the entire list of elements and do not modify the individual elements of the list. When "C to D" is stated, it means C or more and D or less, unless otherwise specified.

It will be understood that, although the terms "first," "second," "third," etc., may be used herein to describe various elements, components, regions, layers and/or sections, these elements, components, regions, layers and/or sections should not be limited by these terms. These terms do not correspond to a particular order, position, or superiority, and are used only used to distinguish one element, member, component, region, area, layer, section, or portion from another element, member, component, region, area, layer, section, or portion. Thus, a first element, component, region, layer or section described below could be termed a second element, component, region, layer or section, without departing from the spirit and scope of the present disclosure. The description of an element as a "first" element may not require or imply the presence of a second element or other elements. The terms "first," "second," etc. may also be used herein to differentiate different categories or sets of elements. For conciseness, the terms "first," "second," etc. may represent "first-category (or first-set)," "second-category (or second-set)," etc., respectively.

The terminology used herein is for the purpose of describing embodiments only and is not intended to be limiting of the present disclosure. As used herein, the singular forms "a" and "an" are intended to include the plural forms as well, while the plural forms are also intended to include the singular forms, unless the context clearly indicates otherwise. It will be further understood that the terms "comprises," "comprising," "have," "having," "includes," and "including," when used in this specification, specify the presence of the stated features, integers, steps, operations, elements, and/or components, but do not preclude the presence or addition of one or more other features, integers, steps, operations, elements, components, and/or groups thereof.

As used herein, the terms "substantially," "about," "approximately," and similar terms are used as terms of approximation and not as terms of degree, and are intended to account for the inherent deviations in measured or calculated values that would be recognized by those of ordinary skill in the art. For example, "substantially" may include a range of +/- 5 % of a corresponding value. "About" or "approximately," as used herein, is inclusive of the stated value and means within an acceptable range of deviation for the particular value as determined by one of ordinary skill in the art, considering the measurement in question and the error associated with measurement of the particular quantity (i.e., the limitations of the measurement system). For example, "about" may mean within one or more standard deviations, or within ± 30%, 20%, 10%, 5% of the stated value. Further, the use of "may" when describing embodiments of the present disclosure refers to "one or more embodiments of the present disclosure."

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

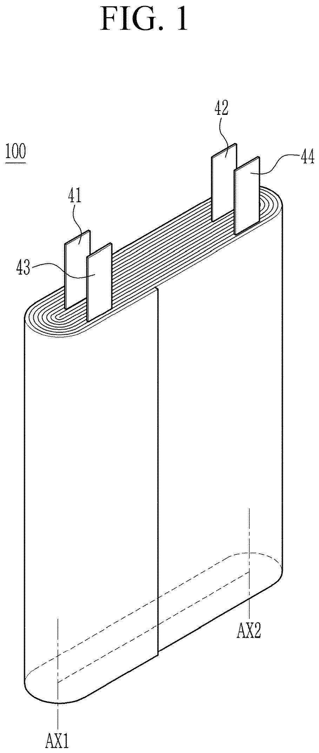

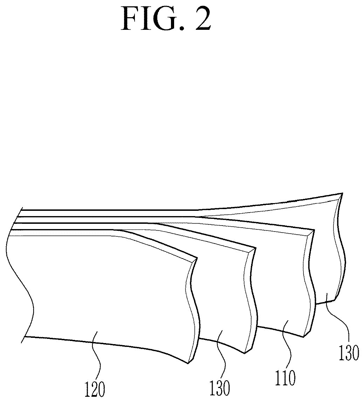

FIG. 1 is a schematic perspective view of an electrode assembly according to one or more embodiments. FIG. 2 is a partially cut-away perspective view showing a part of the electrode assembly shown in FIG. 1 in an unfolded state.

Referring to FIG. 1 and FIG. 2, an electrode assembly 100 may be formed of a configuration in which a strip-shaped first electrode 110 and second electrode 120 are stacked and wound with a separator 130 therebetween. For example, the electrode assembly 100 may include the second electrode 120, the separator 130, the first electrode 110, and the separator 130 sequentially stacked and wound. In one or more embodiments, the second electrode 120 may be positioned closer to the wound center of the electrode assembly 100 than the first electrode 110.

The electrode assembly 100 may be configured in the form of a flattened jelly roll. For example, in the process of winding the stack of the second electrode 120, the separator 130, the first electrode 110, and the separator 130, the stack may be bent around two winding axes AX1 and AX2, thereby configuring the electrode assembly 100 in a jelly roll shape that is pressed flat.

In FIG. 2, for convenience of explanation, the first electrode 110, the second electrode 120, and the separator 130 are schematically shown as having the same width, but at least two of the first electrode 110, the second electrode 120, or the separator 130 may have different widths. Numerous variations are possible, such as the first electrode 110 and the second electrode 120 having a smaller width than the separator 130.

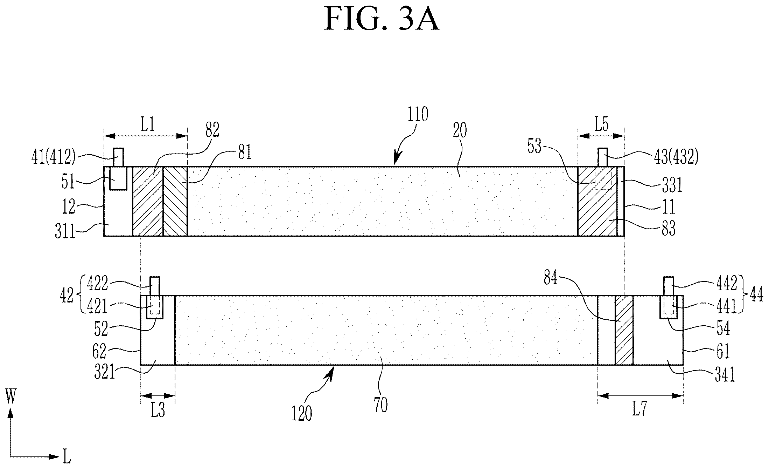

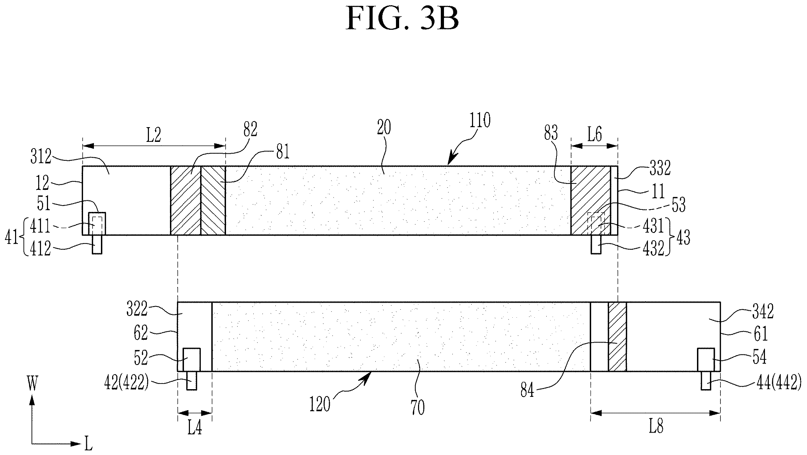

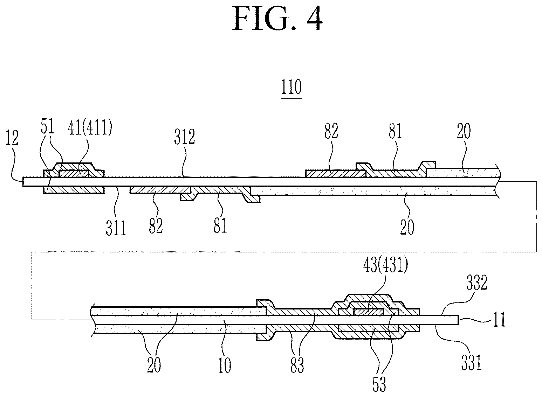

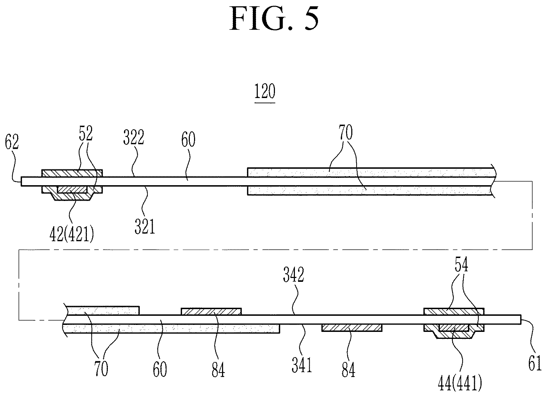

FIG. 3A and FIG. 3B are top plan views showing an unfolded state of a first electrode and a second electrode among an electrode assembly shown in FIG. 2. FIG. 4 is a cross-sectional view of a first electrode shown in FIG. 3A and FIG. 3B. FIG. 5 is a cross-sectional view of a second electrode shown in FIG. 3A and FIG. 3B.

FIG. 3A is a top plan view showing the inner surfaces of the first electrode and the second electrode. FIG. 3B is a top plan view showing the outer surfaces of the first electrode and the second electrode. The inner surface is the side positioned toward the center of the wound in the wound electrode assembly, and the outer surface is the side opposite to the inner surface. The first electrode and the second electrode shown in FIG. 3B are shown as the state in which the top and bottom of the first electrode and the second electrode shown in FIG. 3A are reversed. In FIG. 4 and FIG. 5, the side facing downward is the inner surface, and the side facing upward is the outer surface.

Referring to FIG. 1 to FIG. 5, the first electrode 110 may include a first substrate 10, and a first composite layer 20 placed on the first substrate 10. The first composite layer 20 may be positioned at a distance(s) (e.g., predetermined distance(s)) from both ends of the first substrate 10 on the inner and outer surfaces of the first substrate 10, respectively. The ends on both sides of the first substrate 10 are a winding start end 11 and a winding distal end 12. The winding start end 11 may be positioned at the winding center of the electrode assembly 100. The winding distal end 12 may be positioned on the outermost edge of the electrode assembly 100.

The part of the first substrate 10 that is not covered by the first composite layer 20 may be referred to as an uncoated region. The uncoated region positioned between the winding distal end 12 of the first substrate 10 and the first composite layer 20 may be referred to as first uncoated regions 311 and 312. The first uncoated regions 311 and 312 may be classified as an inner first uncoated region 311 positioned on the inner surface of the first substrate 10, and an outer first uncoated region 312 positioned on the outer surface of the first substrate 10.

A length L1 of the inner first uncoated region 311 and a length L2 of the outer first uncoated region 312 measured along a length direction of the first electrode 110 (a direction L in FIG. 3A and FIG. 3B) may be different from each other. For example, the length L2 of the outer first uncoated region 312 may be greater than the length L1 of the inner first uncoated region 311.

The first electrode 110 may include a first electrode tab 41 positioned between the winding distal end 12 of the first substrate 10 and the first composite layer 20. The first electrode tab 41 may include an overlapping portion 411 overlapping any one uncoated region of the inner first uncoated region 311 or the outer first uncoated region 312 (e.g., the outer first uncoated region 312), and an extended portion 412 extending toward the one side (e.g., the upper side) from the first substrate 10. The overlapping portion 411 may be affixed to the first substrate 10 using a method, such as laser welding.

In one or more embodiments, the first electrode tab 41 may be formed integrally with the first substrate 10. In one or more embodiments, the first electrode tab 41 may include an extended portion 412 extended from the first substrate 10 without an overlapping portion. In both cases, the first electrode tab 41 may transmit the current from the first electrode 110 to the outer terminal, and may be positioned closer to the winding distal end 12 than the first composite layer 20.

The first electrode 110 may include a first protection layer 51. The first protection layer 51 may have an area that is larger than the overlapping portion 411, and may be affixed to the outer first uncoated region 312 to cover the overlapping portion 411. The first protection layer 51 may include a polymer film, and may suppress occurrences of wrinkles or cracks on the first substrate 10 around the first electrode tab 41. The first protection layer 51 is provided as a pair, and may also be provided to the inner first uncoated region 311. The pair of first protection layers 51 may have the same size, and may be provided in the same position to face each other with the first substrate 10 in between.

The second electrode 120 may include a second substrate 60, and a second composite layer 70 positioned on the second substrate 60. The second composite layer 70 may be positioned at a distance(s) (e.g., predetermined distance(s)) from both ends of the second substrate 60 on the inner and outer surfaces of the second substrate 60, respectively. The two ends of the second substrate 60 are a winding start end 61 and a winding distal end 62. The definitions of the winding start end 61 and the winding distal end 62 are the same as described above, so duplicate explanations are omitted.

The portion of the second substrate 60 that is not covered by the second composite layer 70 may be referred to as the uncoated region. The uncoated region positioned between the winding distal end 62 of the second substrate 60 and the second composite layer 70 may be referred to as second uncoated regions 321 and 322. The second uncoated regions 321 and 322 may be classified as an inner second uncoated region 321 positioned on the inner surface of the second substrate 60, and an outer second uncoated region 322 positioned on the outer surface of the second substrate 60. A length L3 of the inner second uncoated region 321 and a length L4 of the outer second uncoated region 322 measured along the length direction of the second electrode 120 (the direction L in FIG. 3A and FIG. 3B) may be the same.

The second electrode 120 may include a second electrode tab 42 positioned between the winding distal end 62 of the second substrate 60 and the second composite layer 70. The second electrode tab 42 may include an overlapping portion 421 overlapping any one of the inner second uncoated region 321 or the outer second uncoated region 322 (e.g., the inner second uncoated region 321), and an extended portion 422 extending from the second substrate 60 toward the other side (e.g., the lower side). The overlapping portion 421 may be affixed to the second substrate 60 using a method, such as laser welding.

In one or more embodiments, the second electrode tab 42 may be formed integrally with the second substrate 60. In one or more embodiments, the second electrode tab 42 may include an extended portion 422 extended from the second substrate 60 without an overlapping portion. In both cases, the second electrode tab 42 may transmit the current from the second electrode 120 to the outer terminal, and may be positioned closer to the winding distal end 62 than the second composite layer 70.

The second electrode 120 may include a second protection layer 52. The second protection layer 52 may have an area that is larger than the overlapping portion 421, and may be affixed to the inner second uncoated region 321 to cover the overlapping portion 421. The second protection layer 52 may include a polymer film, and may suppress the occurrences of wrinkles or cracks on the second substrate 60 around the second electrode tab 42. The second protection layer 52 may be provided in a pair, and also may be provided in the outer second uncoated region 322. The pair of second protection layers 52 may have the same size, and may be provided in the same position to face each other with the second substrate 60 in between.

The first substrate 10 may include a metal thin plate with excellent electrical conductivity (e.g., aluminum foil or aluminum mesh). The first composite layer 20 may be produced through the process of producing a slurry including an active material, a conductive material, and a binder, applying the slurry to the first and second surfaces of the first substrate 10, and drying and compressing the applied slurry. The first substrate 10 provides a path for the movement of charges generated from the first composite layer 20, and supports the first composite layer 20.

The active material of the first composite layer 20 may include a compound that can perform reversible intercalation and deintercalation of lithium, and may include cobalt, manganese, nickel, and/or a mixed oxide of a metal selected from a combination thereof and lithium. For example, the active material of the first composite layer 20 may include transition metal oxides, such as LiCoO₂, LiNiO₂, LiMn₂O₄, Li(NiCoAl)O₂, LiFePO₄, and/or Li(NiCoMn)O₂. The first electrode 110 may be referred to as the positive electrode.

The second substrate 60 may include a metal thin plate with excellent electrical conductivity (e.g., copper foil, copper mesh, nickel foil, or nickel mesh). The second composite layer 70 may be produced through the process of manufacturing a slurry including an active material, a conductive material, and a binder, applying the slurry to the first and second surfaces of the second substrate 60, and drying and compressing the applied slurry. The second substrate 60 provides a path for the movement of charges generated from the second composite layer 70, and supports the second composite layer 70.

The active material of the second composite layer 70 may include materials capable of reversibly intercalating and deintercalating lithium ions (e.g., a carbon-based material). The active material of the second composite layer 70 may include one or more of crystalline carbon or amorphous carbon. The second electrode 120 may be referred to as a negative electrode.

The separator 130 may include a porous substrate, or may include a porous substrate with a coating layer positioned on at least one surface. The porous substrate may include at least one of polyethylene, polypropylene, polyethylene terephthalate, polypropylene terephthalate, polybutylene terephthalate, polyester, polycarbonate, or polyimide. The coating layer may include a binder, and the binder may include a polyvinylidene fluoride (polyvinylidene fluoride)-based compound. The separator 130 insulates the first electrode 110 and the second electrode 120 while allowing the movement of lithium ions.

The first electrode tab 41 and the second electrode tab 42 may be positioned at a distance (e.g., predetermined distance) apart so as not to overlap. The first protection layer 51 and the second protection layer 52 may include a polymer film with an adhesive material applied to one surface. For example, the first protection layer 51 and the second protection layer 52 may include polymer films, such as polyimide, polyethylene terephthalate, and polystyrene. The first electrode 110 and the second electrode 120 are wound along the length direction (the direction L in FIG. 3A and FIG. 3B) together with two separators 130 to form the electrode assembly 100.

The typical electrode assembly undergoes volume changes that expand during the charging process, and that contract during the discharge process, and these volume changes are mainly caused by the volume changes of the second composite layer. If the typical electrode assembly is used for a long time, damage, such as cracks or tears, may occur around the winding distal end of the first substrate due to repeated volume changes. The electrode assembly 100 may include a first insulator 81 and a second insulator 82 to suppress damage to the first substrate 10.

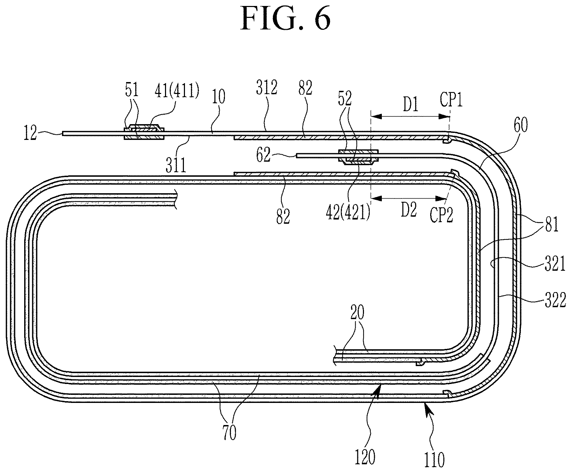

FIG. 6 is a partially enlarged cross-sectional view showing an area around winding distal ends of a first electrode and a second electrode among an electrode assembly shown in FIG. 1. In FIG. 6, the separator is omitted for convenience of understanding.

Referring to FIG. 1 to FIG. 6, in the wound electrode assembly 100, the winding distal end 12 of the first electrode 110 may be positioned farther from the center of the electrode assembly 100 along the winding direction of the stack than the winding distal end 62 of the second electrode 120. In one or more embodiments, along the winding direction of the stack, the winding distal end 12 of the first electrode 110 may be extended longer than the winding distal end 62 of the second electrode 120. At this time, the winding direction of the stack is a direction from one end of the stack where the winding starts to the opposite end.

The first electrode 110 may include a first insulator 81 and a second insulator 82 positioned in the inner first uncoated region 311 and the outer first uncoated region 312. In each of the inner first uncoated region 311 and the outer first uncoated region 312, the first insulator 81 may contact the first composite layer 20, and the second insulator 82 may contact the first insulator 81. The first insulator 81 and the second insulator 82 may each be positioned at a distance from the first electrode tab 41 and the first protection layer 51. In one or more embodiments, the first insulator 81 and the second insulator 82 may be positioned between the first composite layer 20 and the first protection layer 51.

The inner second uncoated region 321 of the second electrode 120 may face the first insulator 81 and the second insulator 82 provided in the outer first uncoated region 312 with the separator therebetween. The outer second uncoated region 322 of the second electrode 120 may face the first insulator 81 and the second insulator 82 provided in the inner first uncoated region 311 with the separator in between. The winding distal end 62 of the second electrode 120 and the second electrode tab 42 may be positioned between the inner first uncoated region 311 and the outer first uncoated region 312.

Portions CP1 and CP2 where the first insulator 81 and the second insulator 82 are in contact may be positioned at a distance from the second electrode tab 42 along the length direction (the direction L) of the first and second electrodes 110 and 120. The winding distal end 62 of the second electrode 120 and the second electrode tab 42 may be positioned farther from the center of the electrode assembly 100 along the winding direction of the stack than the portions CP1 and CP2 where the first insulator 81 and the second insulator 82 are in contact.

For example, the winding distal end 62 of the second electrode 120 and the second electrode tab 42 may be positioned between the second insulator 82 provided in the inner first uncoated region 311 and the second insulator 82 provided in the outer first uncoated region 312. In FIG. 6, the distance between the portions CP1 and the second electrode tab 42 is indicated as D1, and the distance between the portions CP2 and the second electrode tab 42 is indicated as D2. The part of the first insulator 81 may overlap the first composite layer 20. The first insulator 81 and the second insulator 82 may overlap each other, or their sides may contact each other. If the first insulator 81 and the second insulator 82 overlap each other, the portions CP1 and CP2 where the first insulator 81 and the second insulator 82 are in contact are the overlapping part of the first insulator 81 and the second insulator 82. In FIG. 5, the former case is shown as an example.

The first insulator 81 and the second insulator 82 may include a polymer film with an adhesive material coated on one surface. For example, the first insulator 81 and the second insulator 82 may include polymer films, such as polyimide, polyethylene terephthalate, or polystyrene.

The first substrate 10 may be manufactured through the process of preparing a metal base material (an aluminum base material), and cutting the metal base material into the plurality of first substrate 10 through a slitting process. Before the slitting process, the second insulator 82 may be attached to the metal base material, and during the slitting process, the metal base material and the second insulator 82 may be cut together to manufacture the first substrate 10. Next, the first composite layer 20 may be manufactured on both surfaces of the first substrate 10. The width of the second insulator 82 along the width direction of the first electrode 110 (the direction W in FIG. 3A and FIG. 3B) may be the same as the width of the first substrate 10.

The first insulator 81 may be inserted into the first electrode 110, and may be attached to the inner first uncoated region 311 and the outer first uncoated region 312 in the process of winding the first electrode 110 together with two separators 130 and the second electrode 120. One edge of the first insulator 81 may overlap the first composite layer 20, and the opposite edge of the first insulator 81 may overlap the second insulator 82. For example, one edge of the first insulator 81 may cover the first composite layer 20 from above, and the opposite edge of the first insulator 81 may cover the second insulator 82 from above.

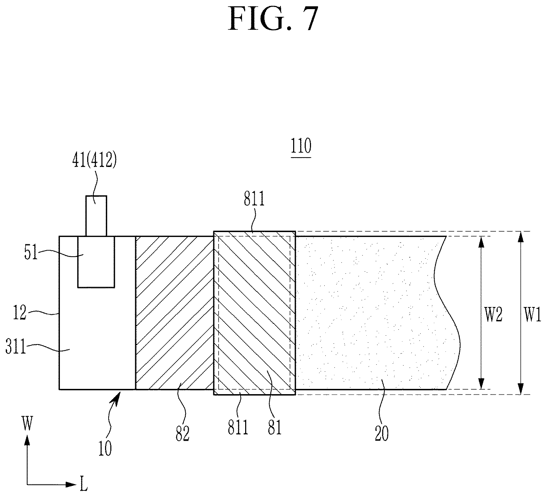

FIG. 7 is a partial enlarged view of FIG. 3A. Referring to FIG. 7, a width W1 of the first insulator 81 along the width direction (the direction W) of the first electrode may be greater than a width W2 of the first substrate 10. In one or more embodiments, the first insulator 81 may include a pair of protruded regions 811 extending from the first substrate 10 to both sides (e.g., the upper and lower sides).

Typical rechargeable batteries undergo a thermal safety evaluation in a high-temperature environment before being released. If the first insulator shrinks due to heat in a high-temperature environment, the first composite layer may be exposed and may contact the second composite layer, and an internal short circuit may occur. The protruded region 811 of the first insulator 81 reduces or prevents exposure of the first composite layer 20 even if the first insulator 81 shrinks due to heat, thereby reducing or preventing the likelihood of the internal short circuit of the electrode assembly. A width of the protruded region 811 may be approximately 0.1 mm, but is not limited to this example.

Referring to FIG. 1 to FIG. 6, the first electrode 110 includes a configuration in which the first and second insulators 81 and 82 are arranged in the first uncoated regions 311 and 312 in contact with the winding distal end 12. The first and second insulators 81 and 82 may protect the first uncoated regions 311 and 312 contacting the winding distal end 12, and may suppress damage, such as cracks or tears of the first substrate 10 due to long-term use of the electrode assembly 100.

In one or more embodiments, the first and second insulators 81 and 82 may improve the safety of the electrode assembly 100 by reliably insulating the first electrode 110 from the second uncoated regions 321 and 322 contacting the winding distal end 62 of the second electrode 120. The separator 130 is positioned between the first electrode 110 and the second electrode 120, but in a high-temperature environment, the first and second electrodes may directly contact each other if the separator shrinks due to heat, or if the electrode assembly is deformed by an external force, and if the separator is damaged.

In one or more embodiments, the electrode assembly 100 arranges the first and second insulators 81 and 82 in the areas where the first electrode 110 and the second electrode 120 are likely to directly face each other. Even if the separator 130 is damaged, the first electrode 110 and the second electrode 120 may not directly face each other, and as a result, the internal short circuit of the electrode assembly 100 may be effectively suppressed.

In one or more embodiments, the components of the electrode assembly 100 have a relatively small thickness, and the stacked portion between the components may have a negative effect on other components, such as causing deformation, such as a bending or a stress concentration in other components in contact with it due to an increase in the thickness.

Assuming that the contact area between the first insulator and the second insulator overlaps the second electrode tab, then the pair of second protective layers and the first insulator and second insulator all overlap around the second electrode tab. In one or more embodiments, the area around the second electrode tab may be deformed convexly, which may cause damage to the neighboring components, such as the first and second substrates, which are made of metal thin plates.

The portions CP1 and CP2 where the first insulator 81 and the second insulator 82 are in contact are located at distances D1 and D2 from the second electrode tab 42 along the length direction (the direction L) of the first and second electrodes 110 and 120. In one or more embodiments, the electrode assembly 100 may reduce or prevent the likelihood of the thickness increasing in a corresponding part (e.g., around the second electrode tab 42). This configuration may reduce or eliminate risk factors that may cause damage to the first substrate 10 and the second substrate 60, and may improve the durability and safety of the electrode assembly 100.

In one or more embodiments, the first insulator 81 and the second insulator 82 may have different respective colors to increase accuracy of a visual inspection. For example, in the process of manufacturing the electrode assembly 100, a visual inspection device may be used to inspect whether the first insulator 81 and the second insulator 82 are placed in the specified positions, and whether the first insulator 81 and the second insulator 82 have the correct width and length.

If the first insulator 81 and the second insulator 82 have different respective colors, the visual inspector uses the color difference to clearly distinguish the first insulator 81 and the second insulator 82, such that each position, width, length, etc. of the first insulator 81 and the second insulator 82 may be measured accurately. The first insulator 81 and the second insulator 82 may include any one of combinations of blue and red, blue and yellow, green and red, or green and yellow, but are not limited to these examples.

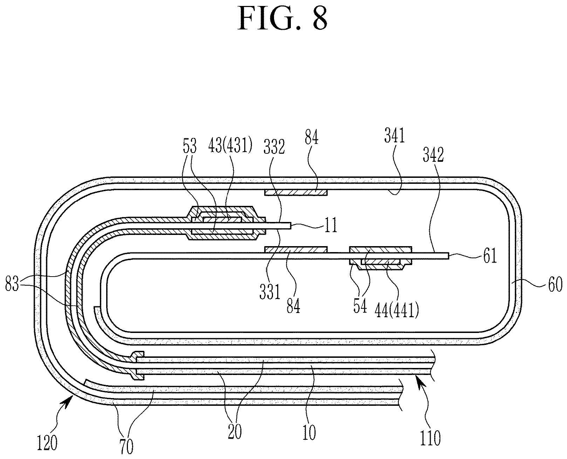

FIG. 8 is a partial enlarged cross-sectional view showing an area around the winding start ends of the first and second electrodes among an electrode assembly shown in FIG. 1. In FIG. 8, the separator is omitted for convenience of understanding.

Referring to FIG. 1 to FIG. 5 and FIG. 8, the uncoated region positioned between the winding start end 11 of the first substrate 10 and the first composite layer 20 may be referred to as third uncoated regions 331 and 332. The third uncoated regions 331 and 332 may be classified as an inner third uncoated region 331 positioned on the inner surface of the first substrate 10 and an outer third uncoated region 332 positioned on the outer surface of the first substrate 10. A length L5 (e.g., see FIG. 3A) of the inner third uncoated region 331, and a length L6 (e.g., see FIG. 3B) of the outer third uncoated region 332 measured along the length direction of the first electrode 110 (the direction L in FIG. 3A and FIG. 3B) may be the same.

The first electrode 110 may include a third electrode tab 43 positioned between the winding start end 11 of the first substrate 10 and the first composite layer 20. The third electrode tab 43 may include an overlapping portion 431 overlapping the uncoated region of any one of the inner third uncoated region 331 or the outer third uncoated region 332 (e.g., the outer third uncoated region 332), and may include an extended portion 432 extending toward one side (e.g., the upper side) from the first substrate 10.

In one or more embodiments, the third electrode tab 43 may be configured integrally with the first substrate 10. In one or more embodiments, the third electrode tab 43 may include the extended portion 432 extended from the first substrate 10 without an overlapping portion. In both cases, the third electrode tab 43, like the first electrode tab 41, may transmit the current from the first electrode 110 to the outer terminal, and may be positioned closer to the winding start end 11 than the first composite layer 20.

The first electrode 110 may include a third protection layer 53. The third protection layer 53 may have an area that is larger than the overlapping portion 431, and may be affixed to the outer third uncoated region 332 to cover the overlapping portion 431. The third protection layer 53 may be provided as a pair, and also may be provided to the inner third uncoated region 331. The pair of third protection layers 53 may have the same size, and may be provided in the same position to face each other with the first substrate 10 in between.

The uncoated region positioned between the winding start end 61 of the second substrate 60 and the second composite layer 70 may be referred to as fourth uncoated regions 341 and 342. The fourth uncoated regions 341 and 342 may be classified as an inner fourth uncoated region 341 positioned on the inner surface of the second substrate 60, and an outer fourth uncoated region 342 positioned on the outer surface of the second substrate 60. A length L7 (see FIG. 3A) of the inner fourth uncoated region 341 measured along the length direction of the second electrode 120 (the direction L in FIG. 3A and FIG. 3B) may be smaller than a length L8 (see FIG. 3B) of the outer fourth uncoated region 342.

The second electrode 120 may include a fourth electrode tab 44 positioned between the winding start end 61 of the second substrate 60 and the second composite layer 70. The fourth electrode tab 44 may include an overlapping portion 441 overlapping the uncoated region of any one of the inner fourth uncoated region 341 or the outer fourth uncoated region 342 (e.g., the inner fourth uncoated region 341), and an extended portion 442 extending to the other side (e.g., the lower side) from the second substrate 60.

In one or more embodiments, the fourth electrode tab 44 may be formed integrally with the second substrate 60. In one or more embodiments, the fourth electrode tab 44 may include the extended portion 442 extended from the second substrate 60 without an overlapping portion. In both cases, the fourth electrode tab 44, like the second electrode tab 42, may transmit the current from the second electrode 120 to the outer terminal, and may be positioned closer to the winding start end 61 than the second composite layer 70.

The second electrode 120 may include a fourth protection layer 54. The fourth protection layer 54 may have an area that is larger than the overlapping portion 441, and may be affixed to the inner fourth uncoated region 341 to cover the overlapping portion 441. The fourth protection layer 54 may be provided in a pair, and may also be provided to the outer fourth uncoated region 342. The pair of fourth protection layers 54 may have the same size, and may be provided in the same position to face each other with the second substrate 60 in between.

The third electrode tab 43 and the fourth electrode tab 44 may be positioned at a distance (e.g., predetermined distance) apart so as not to overlap each other. The third protection layer 53 and the fourth protection layer 54 may include a polymer film with an adhesive material applied to one surface. For example, the third protection layer 53 and the fourth protection layer 54 may include polymer films, such as polyimide, polyethylene terephthalate, and/or polystyrene.

The first electrode 110 may include a third insulator 83. In each of the inner third uncoated region 331 and the outer third uncoated region 332, the third insulator 83 may contact the first composite layer 20, and may cover the third protection layer 53. The third insulator 83 may be positioned at a distance from the winding start end 11 of the first electrode 110. The third insulator 83 may protect the inner third uncoated region 331 and the outer third uncoated region 332 that contact the winding start end 11 of the first electrode 110, so that the damage, such as the cracks or the tears of the first substrate 10 caused by long-term use of the electrode assembly 100, may be suppressed.

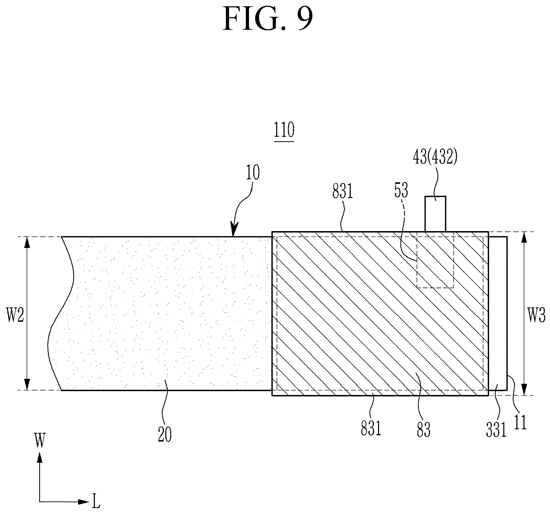

FIG. 9 is a partial enlarged view of FIG. 3A. Referring to FIG. 9, a width W3 of the third insulator 83 along the width direction (the direction W) of the first electrode 110 may be greater than the width of the first substrate 10. In one or more embodiments, the third insulator 83 may include a protruded region 831 extending from the first substrate 10 to both sides (e.g., the upper and lower sides). The protruded region 831 of the third insulator 83 may reduce or prevent the likelihood of the internal short circuit of the electrode assembly 100 by ensuring that the first composite layer 20 is not exposed even if the third insulator 83 shrinks due to heat. A width of the protruded region 831 may be approximately 0.1 mm, but is not limited to this example.

Again referring to FIG. 1 to FIG. 5, and FIG. 8, in the wound electrode assembly 100, the winding start end 11 of the first electrode 110 may be positioned at a distance from the winding start end 61 of the second electrode 120 along the winding direction of the stack. The fourth electrode tab 44 may be positioned between the winding start end 61 of the second electrode 120 and the winding start end 11 of the first electrode 110. The winding start end 11 of the first electrode 110 may be positioned between the inner fourth uncoated region 341 and the outer fourth uncoated region 342 of the second electrode 120.

The second electrode 120 may include a fourth insulator 84. The fourth insulator 84 may be positioned between the fourth protection layer 54 and the second composite layer 70 in the inner fourth uncoated region 341 and the outer fourth uncoated region 342. The fourth insulator 84 may be positioned in the portion facing the winding start end 11 of the first electrode 110 in each of the inner fourth uncoated region 341 and the outer fourth uncoated region 342.

If the winding start end 11 of the first electrode 110 is exposed due to shrinkage or deformation of the separator 130, the exposed winding start end 11 of the first electrode 110 may contact the fourth insulator 84. In one or more embodiments, the fourth insulator 84 may reduce or prevent the likelihood of internal short circuiting of the electrode assembly 100 by reducing or preventing the likelihood of the winding start end 11 of the first electrode 110 contacting the inner fourth uncoated region 341 or the outer fourth uncoated region 342, even if the separator 130 shrinks or deforms.

The second substrate 60 may be manufactured through preparation of a metal base material (a copper or nickel base material), and cutting the metal base material into a plurality of second substrates 60 through a slitting process. Before the slitting process, the fourth insulator 84 may be attached to the metal base material, and during the slitting process, the metal base material and the fourth insulator 84 may be cut together to manufacture the second substrate 60. Next, the second composite layer 70 may be manufactured on both surfaces of the second substrate 60. The width of the fourth insulator 84 along the width direction (the direction W) of the second electrode 120 may be the same as the width of the second substrate 60.

The above-described third insulator 83 and the fourth insulator 84 may include a polymer film with an adhesive material coated on one surface (e.g., a polymer film, such as polyimide, polyethylene terephthalate, or polystyrene).

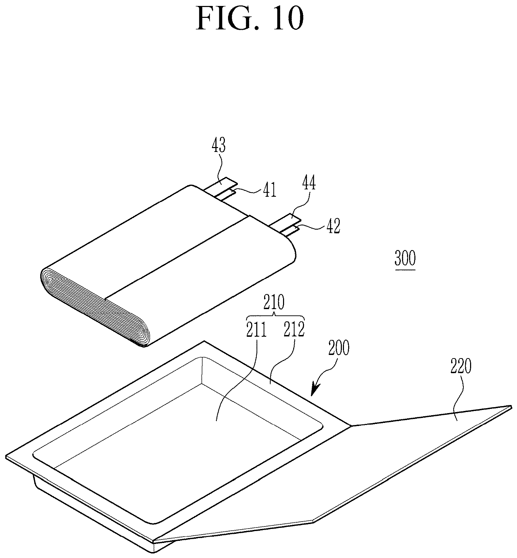

FIG. 10 is an exploded perspective view of a rechargeable battery according to one or more embodiments.

Referring to FIG. 10, a rechargeable battery 300 according to one or more embodiments may include the electrode assembly 100 of the above-described configuration, and a case 200 that accommodates and seals the electrode assembly 100 together with an electrolyte. In FIG. 10, the case 200 is shown as a pouch for an example, but the case 200 may include a square metal can, and the open end of the metal can may be sealed with a cap plate.

The case 200 may include a lower case 210, and an upper case 220 integrally connected with the lower case 210. The lower case 210 may include a storage portion 211, and a sealing portion 212 surrounding the storage portion 211. The storage portion 211 may be formed as a concave space provided in the lower case 210 to accommodate the electrode assembly 100.

The portion of each of the first to fourth electrode tabs 41 to 44 may overlap the sealing portion 212, and the end of each of the first to fourth electrode tabs 41 to 44 may be exposed to the outside of the sealing portion 212. A protective tape may be attached to the portion that overlaps the sealing portion 212 among the first to fourth electrode tabs 41 to 44.

The electrode assembly 100 may be accommodated in the storage portion 211, the upper case 220 may overlap the lower case 210 and the electrode assembly 100 by folding, and the edge of the upper case 220 may be integrally joined with the sealing portion 212 by heat fusion.

The case 200 may include a multi-layer structure of a metal sheet and a polymer sheet. The metal sheet may be an aluminum sheet, and may provide mechanical strength to the case 200. The polymer sheet may include a polyethylene terephthalate (PET) sheet, a nylon sheet, a PET-nylon composite sheet, etc., and may provide insulation and protection to the case 200. The metal sheet may be positioned between at least two polymer sheets.

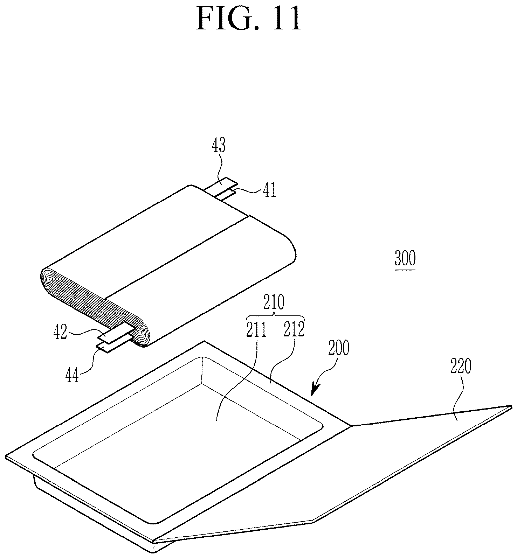

FIG. 11 is an exploded perspective view of a rechargeable battery according to one or more other embodiments. The rechargeable battery of one or more other embodiments has the same or a similar configuration as the rechargeable battery of one or more of the above-described embodiments, except for configurations described below.

Referring to FIG. 11, in the rechargeable battery according to one or more other embodiments, the second electrode tab 42 and the fourth electrode tab 44 may be positioned on an opposite side(s) from the first electrode tab 41 and the third electrode tab 43. For example, the first electrode tab 41 and the third electrode tab 43 can be positioned on one side of the electrode assembly 100 (e.g., upper right side of the drawing as a reference), and the second electrode tab 42 and the fourth electrode tab 44 may be positioned on an opposite side of the electrode assembly 100 (e.g., lower left side of the drawing as a reference). The second and fourth electrode tabs 42 and 44 may be arranged in various ways as long as they do not contact the first and third electrode tabs 41 and 43.

While the present disclosure has been described in connection with what is presently considered to be practical embodiments, it is to be understood that the present disclosure is not limited to the disclosed embodiments, but, on the contrary, is intended to cover various modifications and equivalent arrangements included within the spirit and scope of the appended claims, with functional equivalents thereof to be included therein.

## Claims

1. An electrode assembly (100) comprising:
a first electrode (100) comprising a first substrate (10), and a first composite layer (20) on the first substrate (10);
a separator (130);
a second electrode (120) comprising a second substrate (60) and a second composite layer (70) on the second substrate (60), the second electrode (120) being stacked and wound with the first electrode (100) with the separator (130) therebetween;
a first uncoated region (311, 312) and a first electrode tab (41) between a winding distal end (12) of the first substrate (10) and the first composite layer (20);
a second uncoated region (321, 322) and a second electrode tab (42) between a winding distal end (12) of the second substrate (60) and the second composite layer (70);
a first insulator (81) at the first electrode (100), and contacting the first composite layer (20) in the first uncoated region (311, 312); and
a second insulator (82) at the first electrode (100), and contacting the first insulator (81) in the first uncoated region (311, 312),
wherein the first insulator (81) and the second insulator (82) contact each other at a distance from the second electrode tab (42) along a length direction of the first electrode (100) and the second electrode (120).

2. The electrode assembly (100) as claimed in claim 1, wherein the second electrode (120) is closer to a center of the electrode assembly (100) than the first electrode (100), and
wherein the winding distal end (12) of the first substrate (10) is further from the center of the electrode assembly (100) than a winding distal end (12) of the second substrate (60) along a winding direction of the first electrode (100) and the second electrode (120).

3. The electrode assembly (100) as claimed in claim 1 or 2, wherein the first uncoated region (311, 312) comprises an inner first uncoated region (311) and an outer first uncoated region (312), and
wherein the first insulator (81) and the second insulator (82) are in the inner first uncoated region (311) and the outer first uncoated region (312), respectively.

4. The electrode assembly (100) as claimed in any one of claims 1 to 3, wherein the second electrode tab (42) and the winding distal end (12) of the second substrate (60) are between the second insulator (82) in the inner first uncoated region (311) and the second insulator (82) in the outer first uncoated region (312).

5. The electrode assembly (100) as claimed in any one of claims 1 to 4, wherein the first insulator (81) and the second insulator (82) comprise a polymer film with an adhesive material coated on one surface facing the first uncoated region (311).

6. The electrode assembly (100) as claimed in any one of claims 1 to 5, wherein the first insulator (81) and the second insulator (82) have different respective colors; and or wherein a width of the first insulator (81) along a width direction of the first electrode (100) is greater than a width of the first substrate (10).

7. The electrode assembly (100) as claimed in any one of claims 1 to 6, wherein a winding start end (11) of the first substrate (10) is at a distance from a winding start end (11) of the second substrate (60) along the winding direction.

8. The electrode assembly (100) as claimed in any one of claims 1 to 7, wherein a third uncoated region (331, 332) and a third electrode tab (43) are between the winding start end (11) of the first substrate (10) and the first composite layer (20),
wherein a fourth uncoated region (341, 342) and a fourth electrode tab (44) are between the winding start end (11) of the second substrate (60) and the second composite layer (70), and
wherein the fourth electrode tab (44) is between the winding start end (11) of the second substrate (60) and the winding start end (11) of the first substrate (10) along the winding direction; and preferably further comprising a third insulator (83) in the third uncoated region (331, 332), contacting the first composite layer (20), and at a distance from the winding start end (11) of the first substrate (10).

9. The electrode assembly (100) as claimed in claim 8, wherein the fourth uncoated region (341, 342) comprises an inner fourth uncoated region (341) and an outer fourth uncoated region (342),
wherein a fourth insulator (84) is in the inner fourth uncoated region (341) and the outer fourth uncoated region (342), and
wherein the winding start end (11) of the first substrate (10) is between the fourth insulator (84) in the inner fourth uncoated region (341) and the fourth insulator (84) in the outer fourth uncoated region (342).

10. An electrode assembly (100) comprising:
a first electrode (100) comprising a first substrate (10), a first uncoated region (311) contacting a winding distal end (12) of the first substrate (10), a third uncoated region (331, 332) contacting a winding start end (11) of the first substrate (10), and a first composite layer (20) between the first uncoated region (311, 312) and the third uncoated region (331, 332);
a second electrode (120) comprising a second substrate (60), a second uncoated region (321, 322) contacting a winding distal end (12) of the second substrate (60), a fourth uncoated region (341, 342) contacting a winding start end (11) of the second substrate (60), and a second composite layer (70) between the second uncoated region (321, 322) and the fourth uncoated region (341, 342), and stacked and wound along with the first electrode (100) with a separator (130) in between;
an insulator in a region facing the winding distal end (12) of the second substrate (60) in the first uncoated region (311); and
another insulator in a region facing the winding start end (11) of the first substrate (10) in the fourth uncoated region (341, 342),
wherein, along a winding direction of the first electrode (100) and the second electrode (120), the winding distal end (12) of the first substrate (10) and the winding distal end (12) of the second substrate (60) are spaced apart from each other, and the winding start end (11) of the first substrate (10) and the winding start end (11) of the second substrate (60) are spaced apart from each other.

11. The electrode assembly (100) as claimed in claim 10, wherein the insulator comprises a first insulator (81) contacting the first composite layer (20) and a second insulator (82) contacting the first insulator (81) in the first uncoated region (311),
wherein the second electrode (120) comprises a second electrode tab (42) in the second uncoated region (321, 322) at a distance from a portion where the first insulator (81) and the second insulator (82) are in contact along the winding direction.

12. The electrode assembly (100) as claimed in claim 10 or 11, wherein the winding distal end (12) of the second substrate (60) and the second electrode tab (42) face the second insulator (82).

13. The electrode assembly (100) as claimed in any one of claims 10 to 12, further comprising a third insulator (83) in the third uncoated region (331, 332),
wherein the other insulator comprises a fourth insulator (84) in the fourth uncoated region (341, 342), and
wherein the winding start end (11) of the first substrate (10) faces the fourth insulator (84).

14. A rechargeable battery comprising:
an electrode assembly (100) comprising a first electrode (100) and a second electrode (120) stacked and wound with a separator (130) in between, and a first insulator (81) and a second insulator (82) at the first electrode (100); and
a case (200) accommodating and sealing the electrode assembly (100) with an electrolyte,
wherein the first electrode (100) comprises a first substrate (10), and a first composite layer (20) on the first substrate (10),
wherein a first uncoated region (311) and a first electrode tab (41) are between a winding distal end (12) of the first substrate (10) and the first composite layer (20),
wherein the second electrode (120) comprises a second substrate (60), and a second composite layer (70) on the second substrate (60),
wherein a second uncoated region (321, 322) and a second electrode tab (42) are between a winding distal end (12) of the second substrate (60) and the second composite layer (70),
wherein the first insulator (81) contacts the first composite layer (20) in the first uncoated region (311),
wherein the second insulator (82) contacts the first insulator (81) in the first uncoated region (311), and
wherein part where the first insulator (81) and the second insulator (82) are in contact is at a distance from the second electrode tab (42) along a length direction of the first electrode (100) and the second electrode (120).

15. The rechargeable battery as claimed in claim 14, wherein the first uncoated region (311) comprises an inner first uncoated region (311) and an outer first uncoated region (312),
wherein the first insulator (81) and the second insulator (82) are in the inner first uncoated region (311) and the outer first uncoated region (312), and
wherein the second electrode tab (42) and the winding distal end (12) of the second substrate (60) is between the second insulator (82) in the inner first uncoated region (311) and the second insulator (82) in the outer first uncoated region (312); and preferably further comprising a fourth uncoated region (341, 342) and a fourth electrode tab (44) between a winding start end (11) of the second substrate (60) and the second composite layer (70),
wherein the fourth uncoated region (341, 342) comprises an inner fourth uncoated region (341) and an outer fourth uncoated region (342),
wherein a fourth insulator (84) is in the inner fourth uncoated region (341) and the outer fourth uncoated region (342), and
wherein a winding start end (11) of the first substrate (10) is between the fourth insulator (84) in the inner fourth uncoated region (341) and the fourth insulator (84) in the outer fourth uncoated region (342).
